# EUROPÄISCHE PATENTSCHRIFT

(11) **EP 2 325 111 B1**
(45) Veröffentlichungstag und Bekanntmachung des Hinweises auf die Patenterteilung: **11.07.2012**
(21) Anmeldenummer: 10013961.7
(22) Anmeldetag: 26.10.2010
(51) Int. Cl.: B65G 1/04, B65G 1/137

(54) **Lageranordnung**
Storage assembly
Agencement de stockage

(30) Priorität: 26.10.2009 DE 202009014456 U
(43) Veröffentlichungstag der Anmeldung: 25.05.2011
(73) Patentinhaber: Westfalia Intralogistic GmbH, 33428 Harsewinkel (DE)
(72) Erfinder: Bockstette, Christian, 33428 Harsewinkel (DE)
(74) Vertreter: Wagner, Carsten

(56) Entgegenhaltungen:
- EP-A1- 1 041 017
- WO-A-2006/051329
- DE-A1- 19 923 813
- JP-A- 09 052 604

## Beschreibung

Die Erfindung betrifft eine Lageranordnung der im Oberbegriff des Anspruchs 1 genannten Art.

Derartige Lageranordnungen sind, beispielsweise in Form von Regallagern, allgemein bekannt.

Durch EP 1 446 353 B1 ist eine Lageranordnung der betreffenden Art bekannt, die eine Regalanordnung aufweist, an der Lagerplätze gebildet sind. Die bekannte Lageranordnung weist wenigstens ein flurfreies Regalförderzeug zur Ein- bzw. Auslagerung von Stückgütern an den bzw. von den Lagerplätzen auf, das entlang einer oberhalb der Regalanordnung oder in der obersten Regalebene angeordneten Führungseinrichtung verfahrbar ist. Bei der aus der Druckschrift bekannten Lageranordnung weist das flurfreie Regalförderzeug ein in Vertikalrichtung bewegliches Lastaufnahmemittel auf, an dem beispielsweise eine Gabelanordnung angeordnet sein kann, mittels derer Stückgüter an den Lagerplätzen eingelagert bzw. zur Auslagerung von den Lagerplätzen entnommen werden können.

Aufgrund der Verwendung wenigstens eines flurfreien Regalförderzeuges weist die bekannte Lageranordnung hinsichtlich der Lagertopologie eine hohe Flexibilität auf.

Der Erfindung liegt die Aufgabe zugrunde, eine Lageranordnung der im Oberbegriff des Anspruchs 1 genannten Art anzugeben, bei der die Flexibilität hinsichtlich der Lagertopologie weiter erhöht ist.

Diese Aufgabe wird durch die im Anspruch 1 angegebene Erfindung gelöst.

Erfindungsgemäß weist die Lageranordnung wenigstesns ein regalfreien Bereich auf und ist in Horizontalrichtung in einen ersten Bereich, der einen Regalbereich bildet, und einen zweiten Bereich, der den regalfreien Bereich umfaßt, unterteilt, wobei sich die Führungseinrichtung in Horizontalrichtung bis in den zweiten Bereich erstreckt. Erfindungsgemäß weist der zweite Bereich in Bodennähe den regalfreien Bereich und oberhalb des regalfreien Bereiches Regale auf. Der regalfreie Bereich, der nicht zur Lagerung von Stückgütern genutzt wird, kann beispielsweise eine Kommissionier- bzw. Bereitstellungszone bilden. In herkömmlichen Lageranordnungen bleibt der oberhalb der Kommissionier- bzw. Bereitstellungszone gebildete Raum ungenutzt. Demgegenüber wird bei der erfindungsgemäßen Lageranordnung dieser Raum zur Lagerung von Stückgütern genutzt, indem oberhalb des regalfreien Bereiches Regale vorgesehen sind. Auf diese Weise ist die Raumausnutzung der erfindungsgemäßen Lageranordnung gegenüber bekannten Lageranordnungen verbessert. Mittels des flurfreien Regalförderzeuges können Lagerplätze, die an den oberhalb des regalfreien Bereiches vorgesehenen Regalen gebildet sind, zur Ein- und Auslagerung von Stückgütern bedient werden, wozu sich die Führungseinrichtung für das flurfreie Regalförderzeug in Horizontalrichtung bis in den zweiten Bereich erstreckt.

Die erfindungsgemäße Regalanordnung weist somit hinsichtlich der Lagertopologie eine erhöhte Flexibilität auf.

Die Topologie der Regalanordnung mit Regalen und zwischen den Regalen gebildeten Regalgassen ist entsprechend den jeweiligen Anforderungen innerhalb weiter Grenzen wählbar.

Darüber hinaus kann die erfindungsgemäße Lageranordnung auch zwei oder mehrere flurfreie Regalförderzeuge aufweisen.

Eine vorteilhafte Weiterbildung sieht vor, daß flurfreie Regalförderzeug in dem regalfreien Bereich als Senkrechtförderer fungiert. Bei dieser Ausführungsform erhält das flurfreie Regalförderzeug eine zusätzliche Funktionalität, so daß die durch das Vorsehen des flurfreien Regalförderzeuges ohnehin vorhandenen technischen Ressourcen durch die erfindungsgemäße Ausgestaltung besser genutzt werden.

Eine besonders vorteilhafte Weiterbildung sieht vor, daß in dem regalfreien Bereich wenigstens eine Übergabestation gebildet ist, an der ein von dem flurfreien Regalförderzeug gefördertes Stückgut an ein externes Fördermittel übergebbar bzw. von dem externen Fördermittel übernehmbar ist. Bei dieser Ausführungsform dient das flurfreie Regalförderzeug in seiner Funktion als Senkrechtförderer dazu, Stückgüter an ein externes Fördermittel zu übergeben bzw. von dem externen Fördermittel zu übernehmen. Beispielsweise kann das flurfreie Regalförderzeug ein auszulagerndes Stückgut an der Übergabestation an das externe Fördermittel übergeben, das das Stückgut daraufhin in eine Versandzone fördert. Gleichermaßen ist es möglich, beispielsweise aus einem der Lageranordnung benachbarten Produktionsbereich ein Stückgut, das in der Regalanordnung einzulagern ist, von einem externen Fördermittel an das flurfreie Regalförderzeug zu übergeben, das das Stückgut daraufhin an einem geeigneten Lagerplatz in der Regalanordnung einlagert. Bei dem externen Fördermittel kann es sich um ein beliebiges geeignetes Fördermittel handeln, beispielsweise um ein Förderband oder einen Stapler oder ein beliebiges anderes Fördermittel.

Um die Flexibilität hinsichtlich der Übergabe bzw. Übernahme von Stückgütern von dem Regalförderzeug.an ein externes Fördermittel bzw. von einem externen Fördermittel zu erhöhen, sieht eine vorteilhafte Weiterbildung der vorgenannten Ausführungsform wenigstens zwei in Vertikalrichtung zueinander beabstandete Übergabestationen vor.

Eine andere Weiterbildung der Erfindung sieht vor, daß in dem zweiten Bereich der regalfreie Bereich durch eine Zwischendecke von dem Regale aufweisenden Bereich abgetrennt ist und daß in der Zwischendecke eine Öffnung für ein Lastaufnahmemittel des flurfreien Regalförderzeuges gebildet ist. Bei dieser Ausführungsform kann der regalfreie Bereich insbesondere in Bodennähe unterhalb der Zwischendecke und der Regale aufweisende Bereich oberhalb der Zwischendecke gebildet sein. Ist in dem regalfreien Bereich beispielsweise eine Kommissionierzone gebildet, so ist durch die Zwischendecke verhindert, daß während des Transportes mittels des flurfreien Regalförderzeuges herabfallendes Stückgut in die Kommissionierzone fällt. Außerdem ist bei dieser Ausführungsform die Raumausnutzung in einem vorhandenen Gebäude verbessert, indem ein oberhalb der Kommissionierzone liegender Bereich für die Lagerung von Stückgütern verwendet werden kann. Durch die Öffnung in der Zwischendecke hindurch kann das flurfreie Regalförderzeug in seiner Funktion als Senkrechförderer Stückgüter dann in die Kommissionierzone befördern.

Die Erfindung wird nachfolgend anhand der beigefügten stark schematisierten und nicht maßstäblichen Zeichnung näher erläutert, in der Ausführungsbeispiele einer erfindungsgemäßen Lageranordnung dargestellt sind. Dabei bilden alle beschriebenen, in der Zeichnung dargestellten und in den Patentansprüchen beanspruchten Merkmale für sich genommen sowie in beliebiger Kombination miteinander den Gegenstand der Erfindung, unabhängig von ihrer Zusammenfassung in den Patentansprüchen und deren Rückbeziehung sowie unabhängig von ihrer Beschreibung bzw. Darstellung in der Zeichnung.

Es zeigt:
- Fig. 1: stark schematisiert eine Seitenansicht eines ersten Ausführungsbeispieles einer nicht beanspruchten Lageranordnung,
- Fig. 2: in gleicher Darstellung wie Fig. 1 ein zweites Ausführungsbeispiel einer nicht beanspruchtenLageranordnung,
- Fig. 3: in gleicher Darstellung wie Fig. 1 ein Ausführungsbeispiel einer erfin- dungsgemäßen Lageranordnung,
- Fig. 4: einen Horizontalabschnitt durch die La- geranordnung gemäß Fig. 3 und
- Fig. 5: in einer angedeutet perspektivischen Ansicht ein Ausführungsbeispiel einer erfindungsgemäßen Lageranordnung.

In den Figuren der Zeichnung sind gleiche bzw. sich entsprechende Bauteile mit den gleichen Bezugszeichen versehen.

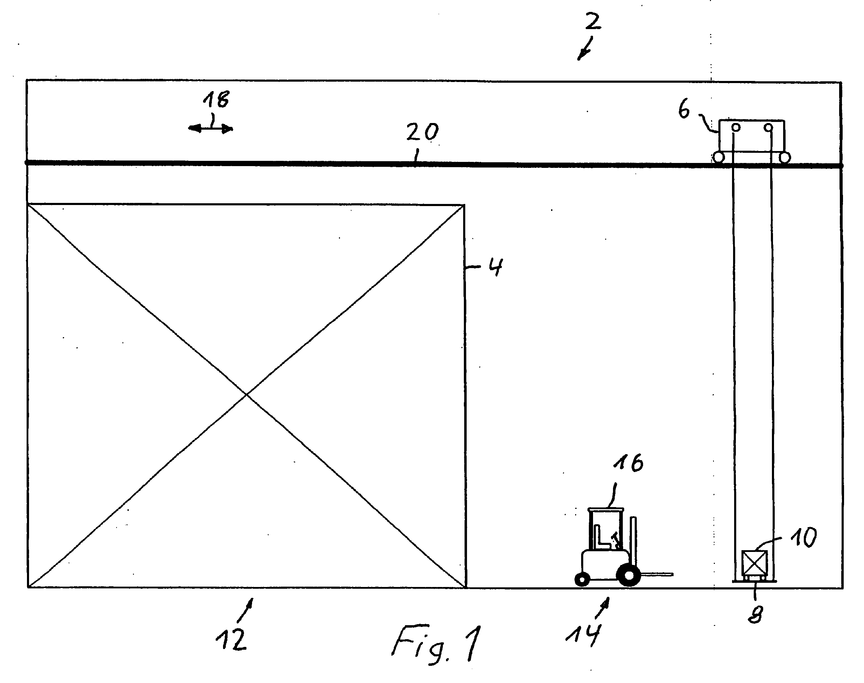

In Fig. 1 ist ein erstes Ausführungsbeispiel einer Lageranordnung 2 dargestellt, die eine in Fig. 1 lediglich schematisch angedeutete Regalanordnung 4 aufweist. Die Regalanordnung 4 weist Regale auf, an denen Lagerplätze und zwischen denen Regalgassen gebildet sind. Die Lageranordnung 2 weist ferner ein flurfreies Regalförderzeug 6 mit einer anheb- bzw. absenkbaren Lastaufnahmevorrichtung mit einem Lastaufnahmemittel auf, mittels dessen ein Stückgut 10 an einem der Lagerplätze der Regale der Regalanordnung 4 einlagerbar bzw. von einem der Lagerplätze auslagerbar ist.

Es weist die Lageranordnung 2 wenigstens einen regalfreien Bereich auf, wobei das flurfreie Regalförderzeug 6 in dem regalfreien Bereich als Senkrechtförderer fungiert.

Hierzu ist bei diesem Ausführungsbeispiel die Lageranordnung 2 in Horizontalrichtung in einen ersten Bereich 12 und einen zweiten Bereich 14 unterteilt. Der erste Bereich bildet einen Regalbereich, in dem sich die Regalanordnung 4 befindet, während der zweite Bereich den regalfreien Bereich bildet, der bei diesem Ausführungsbeispiel als Kommissionierzone dient. In Fig. 1 ist stellvertretend für Fördertechnik bzw. Handhabungstechnik zur Handhabung der Stückgüter 10 in der Kommissionierzone ein Gabelstapler 16 dargestellt.

Das flurfreie Regalförderzeug 6 ist in Richtung eines Doppelpfeiles 18 entlang einer Führungseinrichtung 20, die Führungsschienen aufweist, verfahrbar. Die Funktionsweise eines flurfreien Regalförderzeuges ist im übrigen dem Fachmann allgemein bekannt, beispielsweise aus der EP 1 446 353 B1, und wird daher hier nicht näher erläutert. Wie aus Fig. 1 ersichtlich ist, erstreckt sich die Führungseinrichtung 20 in Horizontalrichtung bis in den zweiten Bereich 14.

Die Funktionsweise der erfindungsgemäßen Lageranordnung 2 ist wie folgt:
Mittels des flurfreien Regalförderzeuges 6 werden Stückgüter 10 an den Lagerplätzen der Regalanordnung 4 eingelagert bzw. von den Lagerplätzen der Regalanordnung 4 ausgelagert. Zur Übergabe eines ausgelagerten Stückgutes in die Kommissionierzone verfährt das flurfreie Regalförderzeug 6 in Fig. 1 nach rechts in die in Fig. 1 dargestellte Position. In dieser Position wird das Lastaufnahmemittel 8 abgesenkt, so daß das Stückgut 10 in die Kommissionierzone übergeben werden kann, wo es beispielsweise von dem Gabelstapler 16 übernommen werden kann. Erfindungsgemäß fungiert das flurfreie Regalförderzeug 6 somit in dem ersten Bereich 12 als Mittel zur Ein- und Auslagerung von Stückgütern 10 an den bzw. von den Lagerplätzen der Regalanordnung 4, während es in dem regalfreien zweiten Bereich 14 als Senkrechtförderer fungiert. Damit ergibt sich eine zusätzliche Funktionalität des flurfreien Regalförderzeuges 6, aufgrund derer die Flexibilität der Lageranordnung 2 hinsichtlich der Lagertopologie und der Ein- und Auslagerung von Stückgütern verbessert ist.

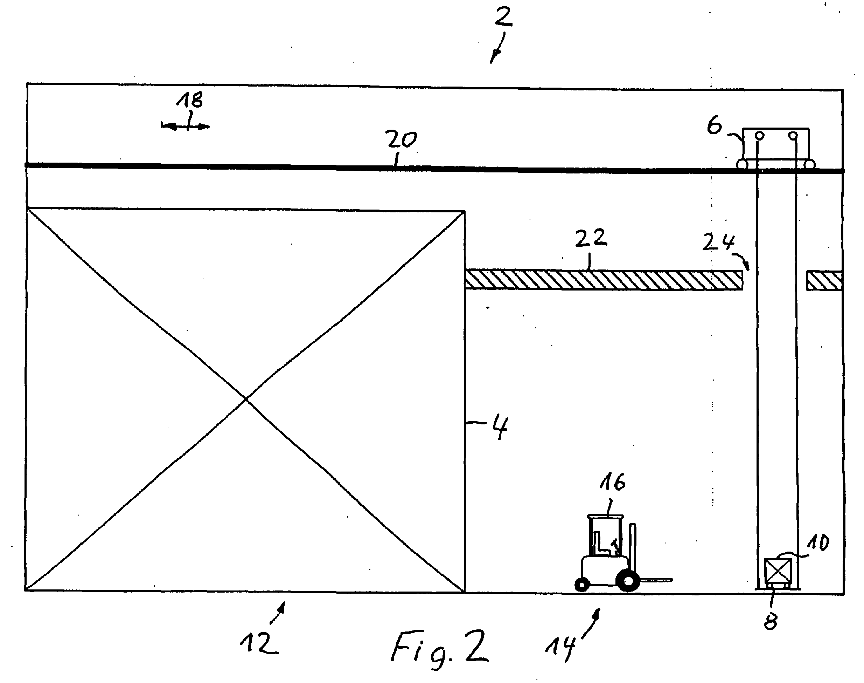

In Fig. 2 ist ein zweites Ausführungsbeispiel einer Lageranordnung 2 dargestellt, das sich von dem Ausführungsbeispiel gemäß Fig. 1 dadurch unterscheidet, daß der regalfreie zweite Bereich durch eine horizontale Zwischendecke 22 horizontal unterteilt ist. In der Zwischendecke 22 ist eine Öffnung 24 für das Lastaufnahmemittel 8 gebildet, so daß das Lastaufnahmemittel 8 durch die Öffnung 24 hindurch in die Kommissionierzone abgesenkt werden kann.

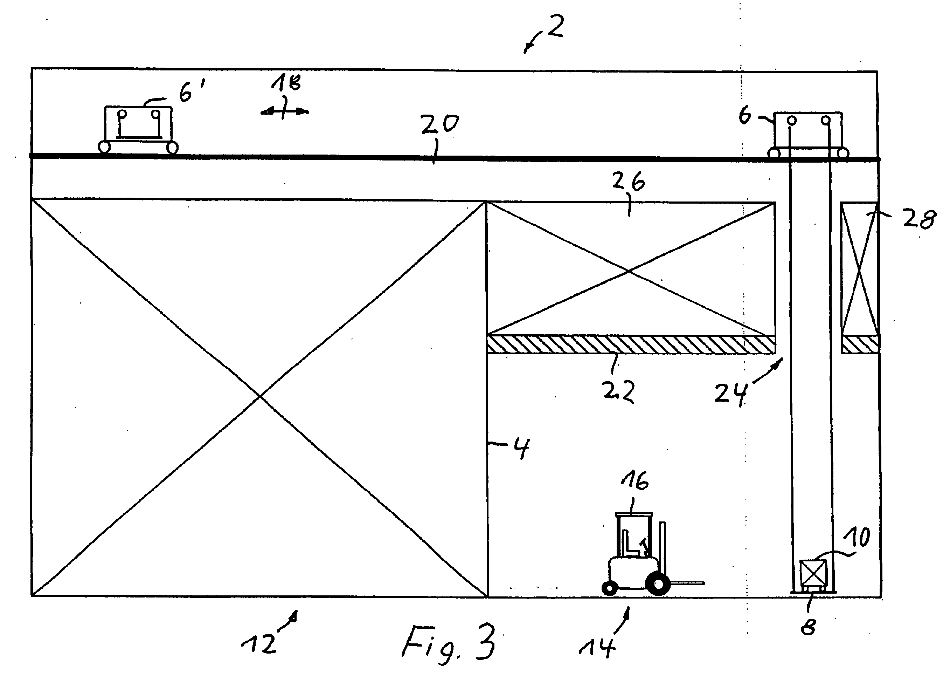

In Fig. 3 ist ein Ausführungsbeispiel einer erfindungsgemäßen Lageranordnung 2 dargestellt, das sich von dem Ausführungsbeispiel gemäß Fig. 2 dadurch unterscheidet, daß in dem zweiten Bereich 14 in Vertikalrichtung oberhalb der Zwischendecke 22 zusätzliche Regale 26, 28 vorgesehen sind, die ebenfalls mittels des flurfreien Regalförderzeuges 6 bedient werden. Auf diese Weise ist die Lagerkapazität der Lageranordnung 2 ohne Vergrößerung des umbauten Raumes erhöht.

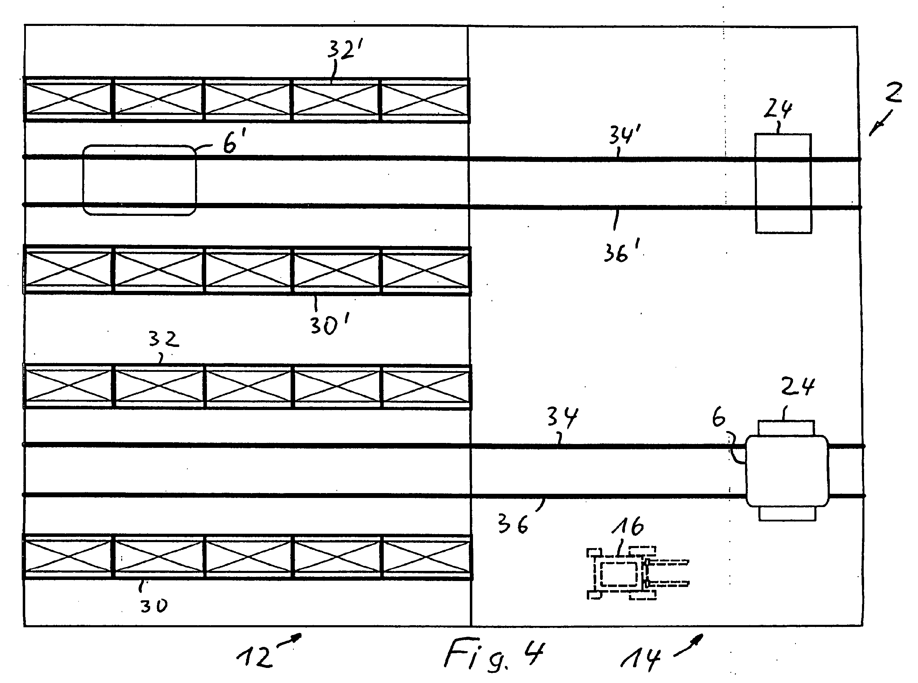

Fig. 4 zeigt einen Horizontalschnitt durch die Lageranordnung 2 gemäß Fig. 3 im Bereich der Zwischendecke 22, wobei Regale 30, 32 der Regalanordnung 4 sowie Führungsschienen 34, 36 der Führungseinrichtung 20 erkennbar sind. Aus Fig. 4 ist ferner ersichtlich, daß die Regalanordnung 4 weitere Regale 30', 32' aufweist, die mittels eines weiteren flurfreien Regalförderzeuges 6' bedient werden können. Anzahl und Anordnung der Regale sowie Anzahl und Anordnung der Regalförderzeuge sind entsprechend den jeweiligen Anforderungen innerhalb weiter Grenzen wählbar.

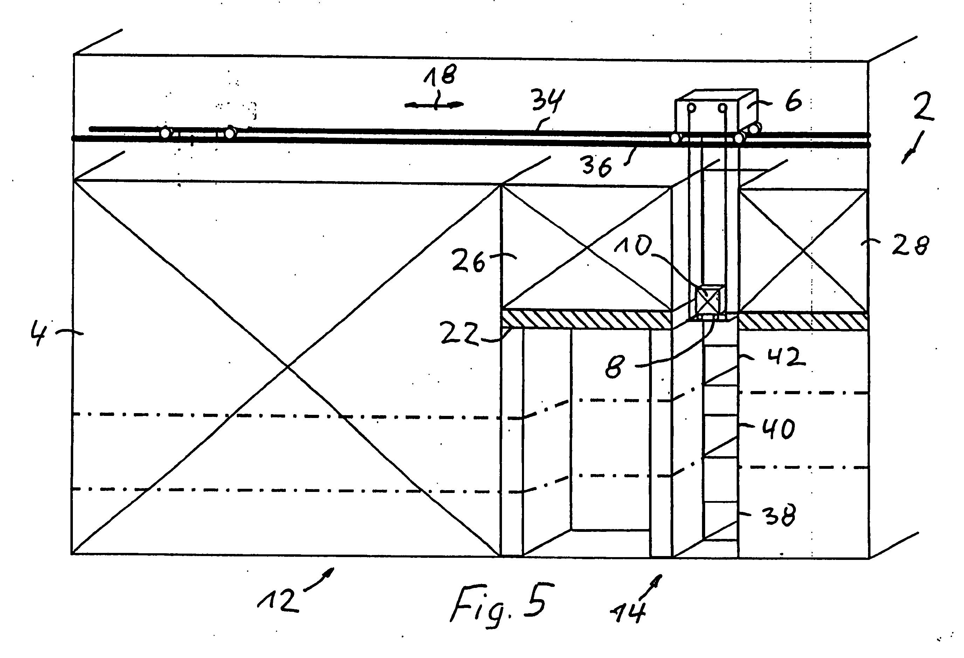

Fig. 5 zeigt eine angedeutet perspektivische Ansicht eines Ausführungsbeispieles einer erfindungsgemäßen Lageranordnung, das sich von dem Ausführungsbeispiel gemäß Fig. 3 dadurch unterscheidet, daß in dem regalfreien Bereich Übergabestationen gebildet sind, an der ein von dem flurfreien Regalförderzeug 6 gefördertes Stückgut an ein externes Fördermittel übergebbar bzw. von dem externen Fördermittel übernehmbar ist. Bei dem dargestellten Ausführungsbeispiel sind drei in Vertikalrichtung zueinander beabstandete Übergabestationen 38, 40, 42 vorgesehen. Bei dem dargestellten Ausführungsbeispiel ist die Lageranordnung 2 dreigeschossig ausgebildet, wobei sich die Übergabestation 38 im Erdgeschoß, die Übergabestation 40 im ersten Geschoß und die Übergabestation 42 im zweiten Geschoß befindet. Bei dem dargestellten Ausführungsbeispiel dient die Übergabestelle 38 dazu, ein mittels des flurfreien Regalförderzeuges 6 von einem Lagerplatz der Regalanordnung 4 entnommenes Stückgut an ein externes Fördermittel zu übergeben, um es beispielsweise in eine Versandzone zu fördern. Das externe Fördermittel kann beispielsweise ein Förderband, ein Stapler oder ein beliebiges anderes Fördermittel sein. Die Übergabestationen 40, 42 dienen bei dem dargestellten Ausführungsbeispiel dazu, aus einem Produktionsbereich einzulagernde Stückgüter 10 mittels des flurfreien Regalförderzeuges 6 aufzunehmen und an einem geeigneten Lagerplatz der Regalanordnung 4 einzulagern.

## Patentansprüche

1. Lageranordnung,
mit einer Regalanordnung (4), an der Lagerplätze gebildet sind und
mit wenigstens einem flurfreien Regalförderzeug (6) zur Ein- bzw. Auslagerung von Stückgütern an den bzw. von den Lagerplätzen, das entlang einer oberhalb der Regalanordnung eingeordneten Führungseinrichtung (20) verfahrbar ist,
**dadurch gekennzeichnet,**
**daß** die Lageranordnung (2) wenigstens einen regalfreien Bereich aufweist,
**daß** die Lageranordnung (2) in Horizontalrichtung in einen ersten Bereich (12), der einen Regalbereich bildet, und einen zweiten Bereich (14), der den regalfreien Bereich umfaßt, unterteilt ist, wobei sich die Führungseinrichtung (20) in Horizontalrichtung bis in den zweiten Bereich (14) erstreckt und
**daß** der zweite Bereich (14) in Bodennähe den regalfreien Bereich und oberhalb des regalfreien Bereiches Regale (26, 28) aufweist; die als Kommissionier- bzw. Bereitstellungszone nutzbar ist.

2. Lageranordnung nach Anspruch 1, **dadurch gekennzeichnet, daß** das flurfreie Regalförderzeug (6) in dem regalfreien Bereich als Senkrechtförderer fungiert.

3. Lageranordnung nach Anspruch 1 oder 2, **dadurch gekennzeichnet, daß** in dem regalfreien Bereich wenigstens eine Übergabestation (38) gebildet ist, an der ein von dem flurfreien Regalförderzeug (6) gefördertes Stückgut an ein externes Fördermittel übergebbar bzw. von dem externen Fördermittel übernembar ist.

4. Lageranordnung nach Anspruch 3, **dadurch gekennzeichnet, daß** wenigstens zwei in Vertikalrichtung zueinander beabstandete Übergabestationen (38, 40, 42) vorgesehen sind.

5. Lageranordnung nach einem der vorhergehenden Ansprüche, **dadurch gekennzeichnet, daß** in dem zweiten Bereich (14) der regalfreie Bereich durch eine Zwischendecke (22) von dem Regale aufweisenden Bereich abgetrennt ist und daß in der Zwischendecke (22) eine Öffnung (24) für ein Lastaufnahmemittel (8) des flurfreien Regalförderzeuges (6) gebildet ist.

## Claims

1. Storage assembly,
comprising a shelf assembly (4) in which storage spaces are formed and
at least one overhead shelf transport device (6) for loading or unloading piece goods into or out of the storage spaces, which device can be driven along a guiding device (20) arranged above the shelf arrangement,
**characterised in that**
the storage arrangement (2) comprises at least one shelving-free area,
**in that** the storage arrangement (2) is divided in horizontal direction into a first area (12) which forms a shelf area and a second area (14) which comprises the shelving-free area, wherein the guiding device (20) extends in horizontal direction into the second area (14) and
**in that** the second area (14) close to the ground comprises the shelving-free area and above the shelving-free area comprises shelves (26, 28) which can be used as a picking or allocating zone.

2. Storage assembly according to claim 1, **characterised in that** the overhead shelf transport device (6) functions in the shelving-free area as a vertical conveyor.

3. Storage assembly according to claim 1 or 2, **characterised in that** at least one transfer station (3 8) is formed in the shelving-free area, at which piece goods conveyed by the overhead shelf transport device (6) can be transferred to an external conveying device or can be taken by the external conveying device.

4. Storage assembly according to claim 3, **characterised in that** at least two transfer stations (3 8, 40, 42) are provided that are spaced apart from one another in vertical direction.

5. Storage assembly according to any one of the preceding claims, **characterised in that** in the second area (14) the shelving-free are is separated by an intermediate cover (22) from the area comprising shelves, and **in that** in the intermediate cover (22) an opening (24) is formed for a loading carrying device (8) of the overhead shelf transport device (6).

## Revendications

1. Système de stockage, comportant un système de rayonnages (4) dans lequel sont réalisées des aires de stockage et comportant au moins un transstockeur hors sol (6) pour déposer ou prélever des colis sur les aires de stockage ou à partir de celles-ci, transstockeur qui est déplaçable le long d'un dispositif de guidage (20) placé au-dessus du système de rayonnages, **caractérisé en ce que** :
- le système de stockage (2) comporte au moins une zone sans rayonnages,
- le système de stockage (2) est subdivisé, dans le sens horizontal, en une première zone (12) qui forme une zone à rayonnages et une seconde zone (14) qui englobe la zone sans rayonnages, le dispositif de guidage (20) s'étendant jusque dans la seconde zone (14) dans le sens horizontal,
- la seconde zone (14) comporte, à proximité du sol, la zone sans rayonnages et, au-dessus de la zone sans rayonnages, des rayonnages (26, 28) qui peuvent être utilisés comme zone de préparation des commandes ou d'approvisionnement.

2. Système de stockage selon la revendication 1, **caractérisé en ce que** le transstockeur hors sol (6) sert de transporteur vertical dans la zone sans rayonnages.

3. Système de stockage selon la revendication 1 ou 2, **caractérisé en ce que**, dans la zone sans rayonnages, on a réalisé au moins une station de transfert (38) dans laquelle un colis transporté par le transstockeur hors sol (6) peut être est remis à un moyen de transport externe ou prélevé par le moyen de transport externe.

4. Système de stockage selon la revendication 3, **caractérisé en ce qu'**on a prévu au moins deux stations de transfert (38, 40, 42), espacées l'une de l'autre dans le sens vertical.

5. Système de stockage selon l'une quelconque des revendications précédentes, **caractérisé en ce que**, dans la seconde zone (14), la zone sans rayonnages est séparée de la zone comportant des rayonnages par un plafond intermédiaire (22) et **en ce qu'**on a réalisé, dans le plafond intermédiaire (22), une ouverture (24) pour un moyen de prise de charge (8) du transstockeur hors sol (6).
